# EUROPÄISCHE PATENTSCHRIFT

(11) **EP 0 515 930 B1**
(45) Veröffentlichungstag und Bekanntmachung des Hinweises auf die Patenterteilung: **26.07.1995**
(21) Anmeldenummer: 92108265.7
(22) Anmeldetag: 15.05.1992
(51) Int. Cl.: F16L 33/22

(54) **Kupplungsvorrichtung zur Herstellung einer nichtlösbaren Rohrverbindung**
Coupling device for fabricating a non-disconnectible pipe joint
Dispositif de jonction pour fabriquer un raccord de tuyaux non-démontable

(30) Priorität: 31.05.1991 DE 4117932
(43) Veröffentlichungstag der Anmeldung: 02.12.1992
(73) Patentinhaber: GEBRÜDER BEUL GmbH & Co. KG, D-57439 Attendorn (DE)
(72) Erfinder: Steinberg, Herbert, W-5952 Attendorn-Windhausen (DE)
(74) Vertreter: Schröter, Martin, Dipl.-Ing.

(56) Entgegenhaltungen:
- WO-A-85/00646
- DE-C- 842 437
- FR-A- 2 641 600
- GB-A- 328 787

## Beschreibung

Die Erfindung betrifft eine Kupplungsvorrichtung zur Herstellung einer nichtlösbaren Rohrverbindung nach dem Oberbegriff des Anspruches 1.

Eine solche Kupplungsvorrichtung ist aus der Firmenschrift "BEULCO" Wasserzähler-Anschlußgarnituren, WAGV 7/73 bekannt. Bei dieser Vorrichtung wird auf das an einem Anschlußstück mit Gewindestutzen angeformte Stützrohr, welches mehrere radiale Vertiefungen an seiner Außenseite aufweist, das glatte Ende des anzuschließenden Kunststoffrohres aufgeschoben bis zum Anschlag in einer Kammer des Gewindestutzens. Auf das außen glatte Ende des Kunststoffrohres wird eine zumindest bereichsweise außen konische Klemmhülse mit entsprechenden inneren Gegenflächen aufgeschoben und, mit einem Innengewinde auf dem Gewindestutzen des Anschlußrohrstückes aufgeschraubt. Dabei wird die Klemmhülse auf das Kunststoffrohrende gepreßt und setzt dieses gegen das innere Stützrohr fest. Die Klemmhülse weist auf ihrem zum Gewindestutzen gerichteten Ende einen äußeren Wulstring auf, der nach der Verschraubung teilweise in die das Kunststoffrohrende aufnehmende Kammer am Gewindestutzen eingreift. Um eine solche Kupplungsvorrichtung festsetzen zu können, muß zur Verdrehung des Spannringes ein ausreichender Arbeitsraum vorhanden sein für ein Schlüsselwerkzeug. Außerdem erfordert eine solche Kupplungsvorrichtung die Ausbildung eines Gewindestutzens am Anschlußrohrstück.

Zur Herstellung einer nichtlösbaren Verbindung eines Metallrohres mit einem Anschlußrohrstück ist es bereits aus der WO 85 00 646 bekannt, die Rohrendpartie durch zonenweises Kaltverformen mittels eines axial zu verschiebenden Preß- bzw. Spannringes zu einer formschlüssen Verbindung mit einem in die Rohrendpartie eingesetzten Stützrohr zu verpressen. Die auf die Rohrendpartie aufzuschiebende geschlossene Klemmhülse weist dabei ringförmige Außenwülste auf, die beim axialen Aufpressen des Spannringes so verformt werden, daß sowohl ihr Metallmaterial als auch ihr Material der Rohrendpartie in Vertiefungen des Stützrohres gepreßt wird. Eine solche notwendige Metallkaltverformung erfordert außerordentlich hohe Kräfte zur axialen Verschiebung des Preßringes, die nur über entsprechende hydraulisch oder mechanisch übersetzende Vorrichtungen aufgebracht werden können. Die Bedienung solcher Werkzeuge erfordert einen relativ großen Arbeitsraum, der in der Praxis vor Ort häufig nicht vorhanden ist. Die bekannten Werkzeuge dieser Art benutzen Spannwerkzeuge, die zur Aufbringung der notwendigen hohen Einpreßkräfte Gewindeübersetzungen erfordern. Die Betätigung dieser Übersetzungen erfordern Angriffsmöglichkeiten für die Bedienungsperson. Die Anwendung einer solchen bekannten Kupplungsvorrichtung bleibt daher auf Rohre mit geringem Außendurchmesser beschränkt.

Aus der GB-A-328 787 ist eine Kupplungsvorrichtung für ein flexibles Rohr an einem Stutzen eines druckbeaufschlagten Systems bekannt, die dem Oberbegriff von Anspruch 1 entspricht. Dabei wird die innen und außen glatte Rohrendpartie eines solchen Rohres auf einem mit äußeren radialen Vertiefungen ausgestatteten Anschlußstutzen aufgeschoben. Auf dieser von innen abgestützten Rohrendpartie sitzt eine konische, längsgeschlitzte Klemmhülse mit endseitig nach außen gerichteten Wulstringen, zwischen denen ein Spannring zur Erzeugung eines Preßsitzes verschiebbar ist. Bei der Montage ist die Einheit aus Klemmhülse und Spannring auf der Rohrendpartei zu montieren. Zur endgültigen Festsetzung und abdichtenden Verbindung einer solchen Kupplungsvorrichtung wird der Spannring in Richtung auf die Befestigungsseite auf der zumindest außen konischen Klemmhülse verschoben. Eine Lösung der Verbindung kann durch Verschieben des Spannringes in der anderen Richtung erfolgen.

Die Aufgabe der Erfindung besteht darin, eine Kupplungsvorrichtung der eingangs genannten Art für Kunststoffrohre vorzuschlagen, die das Aufschieben des Spannringes in axialer Richtung mit relativ geringen Einpreßkräften ermöglicht und bei der der Spannring in der endgültigen Position gesichert festgesetzt ist.

Gelöst wird die Erfindungsaufgabe mit einer Kupplungsvorrichtung mit den kennzeichnenden Merkmalen des Anspruches 1. Der Einsatz der einseitig geschlitzten Klemmhülse in Verbindung mit einem axial mit Preßsitz aufzuschiebenden Spannring, der nach der Montage gesichert festgesetzt ist, führt zu einer einfach zu montierenden Kupplungsvorrichtung, bei der für das axiale Aufschieben des Spannringes relativ geringe Kräfte aufzuwenden sind, die mit einfachen Werkzeugen aufgebracht werden können. Solche erfindungsgemäßen Kupplungsvorrichtungen lassen sich daher auch bei Kunststoffrohren mit großen Dimensionen verwenden und an Örtlichkeiten einsetzen, bei denen nur ein geringer Arbeitsraum zur Verfügung steht. Die Außendurchmesser der geschlitzten Klemmhülse und des Wulstringes und der Innendurchmesser des Spannringes sind so aufeinander abgestimmt, daß nach dem Aufschieben des Spannringes in seine endgültige Position der Preßsitz so erfolgt, daß eine sichere und abdichtende Anlage zwischen Stützrohr und Innenseite der Rohrendpartie erfolgt. Der aufgeschobene Spannring ist in dieser Position hinter dem Wulstring der Klemmhülse gesichert festgesetzt.

Um das Aufschieben des Spannringes auf die Klemmhülse zu erleichtern, sind sowohl am Wulstring nach außen gerichtet Auflaufschrägflächen,die vorzugsweise abgerundet sein können,und innen am Spannring entsprechende Auflaufschrägflächen ausgebildet.Nach Anspruch 4 wird vorgeschlagen, Wulstringe an beiden äußeren Seiten der Klemmhülse auszubilden. Entsprechende beidseitige Ausbildungen des Spannringes führen dazu, daß beide Teile mit beiden Seiten in gleicher Weise montiert werden können und eine Verwechslung der Aufschiebseite ausgeschlossen ist.

Anhand eines abgebildeten Ausführungsbeispieles werden im folgenden weitere Merkmale der Erfindung und der Vorteile im folgenden näher erläutert. Es zeigen:
- Fig. 1: eine halbseitig geschnittene Ansichtsdarstellung einer Kupplungsvorrichtung in Verbindung mit einem Kunststoffrohr,
- Fig. 2: eine halbseitig geschnittene Darstellung eines Anschlußrohrstückes,
- Fig. 3: eine halbseitig geschnittene Darstellung der zugehörigen Klemmhülse
und
- Fig. 4: eine halbseitig geschnittene Darstellung des zugehörigen Spannringes.

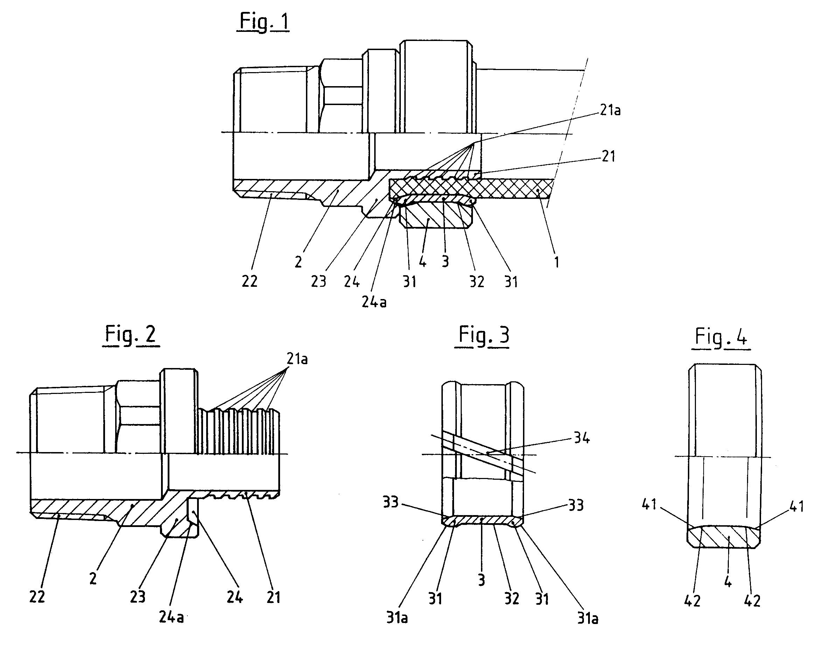

Dargestellt ist in Fig. 1 die Verbindung der Rohrendpartie eines Kunststoffrohres 1 mit einem Anschlußrohrstück 2, welches einen äußeren Gewindeabschnitt 22 und einen Bund 23 aufweist. Zum Aufschieben der innen und außen glatten Rohrendpartie des Kunststoffrohres 1 ist am Anschlußrohrstück 2 ein Stützrohr 21 angeformt mit äußeren radialen Vertiefungen 21a.

Auf die Rohrendpartie ist die mit der Ziffer 3 bezeichnete Klemmhülse aus Metall aufgesteckt und liegt ebenso wie die Rohrendpartie am Bund 23 des Anschlußrohrstückes 2 an. Diese Klemmhülse 3 ist aufgrund des einseitig, geringfügig schräg zur Achse gerichteten Schlitzes 34 in radialer Richtung federnd. Sie weist auf beiden Endseiten Wulstringe 31 auf mit abgerundeten Auflaufschrägflächen 31a nach außen. Zwischen den beiden Wulstringen 31 ist eine zylindrische Sitzfläche 32 ausgebildet.

In axialer Richtung ist auf die Klemmhülse 3 ein entsprechend dimensionierter Spannring 4 aus Metall aufgeschoben, der in seiner Befestigungslage mit einem Preßsitz auf der Sitzfläche 32 der Klemmhülse 3 angeordnet und zwischen den beiden Wulstringen 31 gesichert ist. Um das Aufschieben des Spannringes 4 über den vorderen Wulstring 31 zu erleichtern, sind die entsprechenden Auflaufschrägflächen 41 vorgesehen.

Zur Erleichterung des Aufschiebens der Klemmhülse 3 auf dem Kunststoffrohr 1 sind im Inneren der Klemmhülse die umlaufenden Auflaufschrägflächen 33 vorgesehen. Zwischen dem inneren zylindrischen Abschnitt des Spannringes 4 und den inneren umlaufenden Auflaufschrägflächen 41 ist eine Abrundung 42 vorgesehen.

Beim Aufschieben des Spannringes 4 über den Wulstring 31 wird die einseitig geschlitzte Klemmhülse 3 in radialer Richtung zusammengedrückt, so daß der Spannring 4 über den Wulstring 31 hinwegkommt und in die in Fig. 1 dargestellte Endposition hineingelangt. In dieser Endposition wird über die entsprechende Dimensionierung ein Preßsitz des Spannringes 4 auf der Klemmhülse 3 erreicht, so daß die Klemmhülse ihrerseits einen ausreichenden radialen Druck auf die Rohrendpartie ausübt und diese gegen das Stützrohr 21 abdichtend festsetzt.

Das auf das Stützrohr 21 aufgeschobene Ende des Kunststoffrohres 1 und die darauf aufgeschobene Klemmhülse 3 greifen in die Kammer 24 am Bund 23 ein. Zur Festsetzung verklemmt sich der Wulstring 31 der Klemmhülse 3 gegen die entsprechende Schrägfläche 24a der Kammer 24.

## Patentansprüche

1. Kupplungsvorrichtung zur Herstellung einer Rohrverbindung, bei der die innen und außen glatte Rohrendpartie eines Kunststoffrohres (1) auf ein mit äußeren radialen Vertiefungen ausgestattetes Stützrohr (21), auf diese von innen abgestützte Rohrendpartie eine einseitig geschlitzte, mit äußeren jeweils an den Enden angeordneten Wulstringen (31) ausgestattete Klemmhülse (3) aufgeschoben und darauf ein Spannring (4) mit Preßsitz aufgebracht ist, **dadurch gekennzeichnet**, daß der Spannring (4) über den am vom Verbindungsende abgewandten Ende der Klemmhülse (3) angeordneten Wulstring (31) auf die montierte Klemmhülse (3) aufschiebbar ist und zwischen den beiden Wulstringen (31) anliegend festgesetzt ist, wobei das auf das Stützrohr (21) aufgeschobene Ende des Kunststoffrohres (1) und die darauf aufgeschobene Klemmhülse (3) in eine Kammer (24) eines Bundes (23) des Stützrohres eingreifen.

2. Kupplungsvorrichtung nach Anspruch 1, **dadurch gekennzeichnet,** daß die Wulstringe (31) nach außen gerichtet eine umlaufende Auflaufschrägfläche (31a) aufweist.

3. Kupplungsvorrichtung nach Anspruch 2, **dadurch gekennzeichnet,** daß die Auflaufschrägfläche (31a) abgerundet ist.

4. Kupplungsvorrichtung nach Anspruch 1, **dadurch gekennzeichnet,** daß die Klemmhülse (3) außen eine zylindrische Sitzfläche (32) aufweist.

5. Kupplungsvorrichtung nach Anspruch 1, **dadurch gekennzeichnet,** daß der Spannring (4) an einer oder beiden Stirnseiten innere umlaufende Auflaufschrägflächen (41) aufweist.

6. Kupplungsvorrichtung nach Anspruch 6, **dadurch gekennzeichnet,** daß die Auflaufschrägflachen (41) des Spannringes (4) einen abgerundeten Übergang zu einem inneren zylindrischen Abschnitt bilden.

## Claims

1. Coupling device for producing a pipe joint, wherein the tubular end portion of a plastics material pipe (1) has a smooth internal and external surface and is slipped over a supporting pipe (21), which is provided with external radial indentations, a clamping sleeve (3) being slipped over this tubular end portion, which is supported from within, said sleeve being unilaterally slotted and provided with external bead rings (31), which are each disposed on the respective ends, and a tensioning ring (4) is mounted on said sleeve with a press fit, characterised in that the tensioning ring (4) can be slipped over the assembled clamping sleeve (3) via the bead ring (31), which is disposed on the end of the clamping sleeve (3) remote from the connection end, and said tensioning ring is secured so as to be in abutment between the two bead rings (31), the end of the plastics material pipe (1), which is slipped over the supporting pipe (21) and the clamping sleeve (3), which is slipped over said supporting pipe, engaging in a chamber (24) of a collar (23) of the supporting pipe.

2. Coupling device according to claim 1, characterised in that the bead rings (31) have a circumferential inclined abutment face (31a) when outwardly orientated.

3. Coupling device according to claim 2, characterised in that the inclined abutment face (31a) is rounded.

4. Coupling device according to claim 1, characterised in that the clamping sleeve (3) has a cylindrical seating face (32) externally.

5. Coupling device according to claim 1, characterised in that the tensioning ring (4) has internal, circumferential, inclined abutment faces (41) on one or both end faces.

6. Coupling device according to claim 5,characterised in that the inclined abutment faces (41) of the tensioning ring (4) form a rounded transition region extending to an internal, cylindrical portion.

## Revendications

1. Dispositif d'accouplement destiné à la réalisation d'un raccordement de tube, selon lequel la partie d'extrémité intérieurement et extérieurement lisse d'un tube en matière plastique (1) est glissée sur un tube de support (21) muni de renfoncements radiaux extérieurs, sur cette partie d'extrémité de tube supportée de l'intérieur est enfilée une douille de serrage (3) fendue d'un seul côté comportant des bourrelets annulaires (31) extérieurs disposés respectivement sur les extrémités, et par-dessus, une bague de tension (4) est rapportée par ajustage serré, caractérisé en ce que, sur la douille de serrage (3) montée, la bague de tension (4) peut être enfilée au-dessus du bourrelet annulaire (31) disposé sur l'extrémité de la douille de serrage (3) opposée à l'extrémité de raccordement, et qu'elle est bloquée en prenant appui entre les deux bourrelets annulaires (31), l'extrémité du tube en matière plastique (1) glissée sur le tube de support (21) et la douille de serrage (3) enfilée par-dessus pénétrant dans une chambre (24) d'une collerette (23) du tube de support.

2. Dispositif d'accouplement selon la revendication 1, caratérisé en ce que les bourrelets annulaires (31) comportent une surface d'arrêt inclinée circonférentielle (31a) qui est orientée vers l'extérieur.

3. Dispositif d'accouplement selon la revendication 2, caractérisé en ce que la surface d'arrêt inclinée (31a) est arrondie.

4. Dispositif d'accouplement selon la revendication 1, caractérisé en ce que la douille de serrage (3) comporte à l'extérieur une surface d'appui cylindrique (32).

5. Dispositif d'accouplement selon la revendication 1, caractérisé en ce que la bague de tension (4) comporte des surfaces d'arrêt inclinées circonférentielles intérieures (41) sur l'une ou sur les deux faces frontales.

6. Dispositif d'accouplement selon la revendication 5 caractérisé en ce que les surfaces d'arrêt inclinées (41) de la bague de tension (4) forment une transition arrondie vers une section cylindrique intérieure.
